# EUROPÄISCHE PATENTSCHRIFT

(11) **EP 0 352 304 B1**
(45) Veröffentlichungstag und Bekanntmachung des Hinweises auf die Patenterteilung: **08.09.1993**
(21) Anmeldenummer: 88909741.6
(22) Anmeldetag: 15.11.1988
(51) Int. Cl.: H02J 7/14, B60R 16/02

(54) **FAHRZEUGBORDNETZSYSTEM**
VEHICLE CIRCUIT SYSTEM
CIRCUIT DE BORD DE VEHICULE

(30) Priorität: 21.12.1987 DE 3743317
(43) Veröffentlichungstag der Anmeldung: 31.01.1990
(73) Patentinhaber: ROBERT BOSCH GMBH, 70442 Stuttgart (DE)
(72) Erfinder: HENNEBERGER, Gerhard, D-5100 Aachen (DE); HÄRER, Helmut, D-2105 Seevetal (DE); VAN WYK, Jacobus, Daniel, 2194 Randburg (ZA)
(86) Internationale Anmeldenummer: DE8800712
(87) Internationale Veröffentlichungsnummer: WO8906062

(56) Entgegenhaltungen:
- EP-A- 0 016 559
- WO-A-84/03595
- DE-A- 3 227 653
- US-A- 4 214 198
- US-A- 4 684 818

## Beschreibung

### Stand der Technik

Der nächstliegende Stand der Technik wird durch die Dokumente EP-A-16 559 und US-A-4 684 818 angegeben.

Die Erzeugung elektrischer Energie für ein Kraftfahrzeugbordnetzsystem erfolgt gewöhnlich mit einem Drehstromgenerator, der mit einem Spannungsregler verbunden ist. Der Spannungsregler regelt die Generatorausgangsspannung auf den für die Spannungsversorgung des Bordnetzes erforderlichen Wert. Ein solches Kraftfahrzeug-Bordnetzsystem ist beispielsweise aus der DE-PS 33 13 398 bekannt. Als Generatoren sind Schwungradgeneratoren mit Asynchronmaschine oder permanenterregte Synchronmaschinen, die im Startfall auch als Starter dienen und mit 12 Volt betrieben werden, bekannt. Wegen der niedrigen Bordnetzspannung von 12 Volt bzw. der niedrigen Generatorausgangsspannung von etwa 12 Volt ist die Maschinenauslegung jedoch recht problematisch, da infolge der hohen Stromstärken große Wicklungsquerschnitte erforderlich sind. Weiterhin entstehen durch die hohen Ströme große Verluste und es sind gleichzeitig große und damit teure Halbleiterbauelemente in den Wechselrichtern zur Gleichrichtung der im Generator erzeugten Wechselspannung, bzw. im Startfall zur Umwandlung des Gleichstromes aus der Batterie in Wechselstrom, erforderlich.

### Vorteile der Erfindung

Das erfindungsgemäße Bordnetzsystem mit den kennzeichnenden Merkmalen des Hauptanspruchs hat demgegenüber den Vorteil, daß durch die Einschaltung eines zusätzlichen, zwischen den Starter/Generator und die Batterie bzw. die Verbraucher geschalteten Gleichstromzwischenkreises, die Generatorausgangsspannung bzw. die Eingangsspannung der Wechselrichter wesentlich erhöht werden kann. Dadurch vereinfacht sich die Maschinenauslegung, es können kleinere Wicklungsquerschnitte verwendet werden, da die Stromstärke bei höherer Spannung kleiner gehalten werden kann.

Weiterhin entstehen infolge der verringerten Stromstärke keine hohen Verluste in den im Wechselrichter eingesetzten Leistungshalbleitern, d.h. der Wirkungsgrad des Systems wird verbessert. Gleichzeitig können die Leistungshalbleiter verkleinert und damit ebenfalls verbilligt werden.

Die Erhöhung der Bordnetzspannung von 12 auf 24 Volt hat den Vorteil, daß die Leitungsquerschnitte verringert werden können. Durch den Einsatz eines vorzugsweise bidirektionalen Wandlers zwischen Bordnetzbatterie und Zwischenkreis können zusätzliche Wechselspannungen auf einfache Weise aus diesem Wandler ausgekoppelt werden, beispielsweise kann eine 220 Volt 50 Hertz Wechselspannung ausgekoppelt werden, die im Fahrzeug den Betrieb von konventionellen Elektrogeräten erlaubt.

Aus der EP-A 0 016 559 ist ein elektrisches Kraftfahrzeugbordnetz bekannt, bei dem in üblicher Weise ein Generator, der mit Hilfe eines Spannungsreglers geregelt wird, eine Versorgungsspannung liefert, die nach einer Gleichrichtung eine Batterie auflädt. Zusätzlich ist vorgesehen, aus den drei Phasen des Generators mit Hilfe eines dreiphasigen Spannungswandlers eine höhere Spannung zu erzeugen, die mit Hilfe einer weiteren Gleichrichterbrücke in eine Gleichspannung gewandelt wird, die gegenüber der Bordnetzspannung einen höheren Wert aufweist. Diese erhöhte Spannung wird zur Versorgung spezieller Verbraucher verwendet.

Da die Batterie und damit auch die von der Batterie versorgten Verbraucher direkt vom Generator mit Spannung versorgt werden, muß der Generator so dimensioniert werden, daß an seinem Ausgang eine Spannung entsteht, deren Höhe geeignet ist, die Batterie aufzuladen und die Verbraucher, ausgenommen die speziellen Verbraucher.

Aus der US-PS 4 684 818 ist ein Fahrzeugbordnetz bekannt, bei dem der Dreiphasengenerator als Sternschaltung geschaltet ist und der Sternpunkt auf Masse liegt. An der zugehörigen Gleichrichterbrücke entsteht daher auf einer Seite eine geregelte positive Bordnetzspannung, auf der anderen Seite eine entsprechende negative Spannung gegenüber Masse. Zwischen den beiden Ausgängen der Gleichrichterbrücke liegt daher die doppelte Bordnetz-Gleichspannung, diese kann zur Versorgung spezieller Verbraucher genutzt werden.

Da die meisten Bordnetzverbraucher bei dieser Anordnung von der üblichen Bordnetzspannung versorgt werden und da die Generatorausgangsspannung gegenüber Masse ebenfalls der Bordnetzspannung entspricht, kann der Generator bei beiden genannten Systemen nicht so dimensioniert werden, daß eine besonders geringe Verlustleistung erzielt wird und trotzdem eine sichere Versorgung der Verbraucher gewährleistet ist.

### Zeichnung

Figur 1 zeigt ein Ausführungsbeispiel der vorliegenden Erfindung für ein 24 Volt DC/300 Volt DC Bordnetz mit Schwungradstarter/Generator.
Figur 2 zeigt ein Ausführungsbeispiel eines Schwungradstarter/Generators mit einer Asynchronmaschine und einem Pulswechselrichter, in
Figur 3 ist ein Schwungradstarter/Generator mit einer Synchronmaschine und einer Zweiphasenschaltung dargestellt, Figur 4 zeigt eine Bordnetzkonfiguration mit 24 Volt DC/300 Volt DC mit Multiplex und Asynchronmotor-Schwungradstarter/Generator.

### Beschreibung der Ausführungsbeispiele

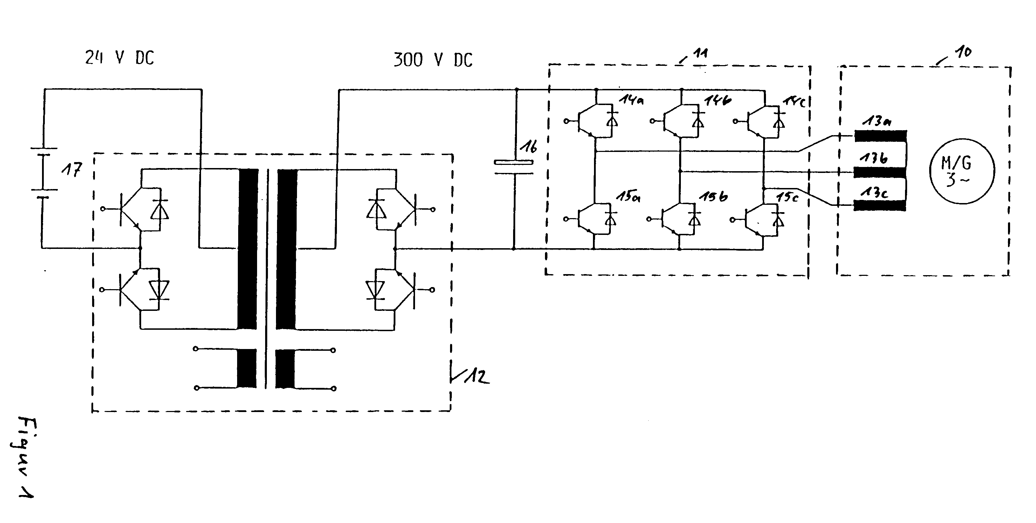

In Figur 1 ist die Grundanordnung eines Bordnetzes mit einer Asynchronmaschine 10, einem Pulswechselrichter 11 und einem bidirektionalen Wandler 12 dargestellt.

Die Ständerwicklungen 13a, b, c der Asynchronmaschine 10 sind in Sternschaltung geschaltet und an den Pulswechselrichter 11 derart angeschlossen, daß jede der Ständerwicklungen zwischen zwei Pulswechselrichterelemente 14 und 15 angeschlossen wird, wobei die anderen Anschlüsse der Pulswechselrichterelemente miteinander leitend verbunden sind und zu einem 300 Volt DC-Zwischenkreis führen, in welchem ein Kondensator 16 parallel zu den Pulswechselrichterelementen 14 und 15 geschaltet ist. Dabei bestehen die Pulswechselrichterelemente aus Transistoren und zugehörigen Freilaufdioden.

Der 300 Volt DC-Zwischenkreis ist über einen bidirektionalen Wandler 12 mit dem 24 Volt DC-Bordnetz gekoppelt. Das 24 Volt-Bordnetz umfaßt in diesem grundsätzlichen Ausführungsbeispiel lediglich eine Batterie 17.

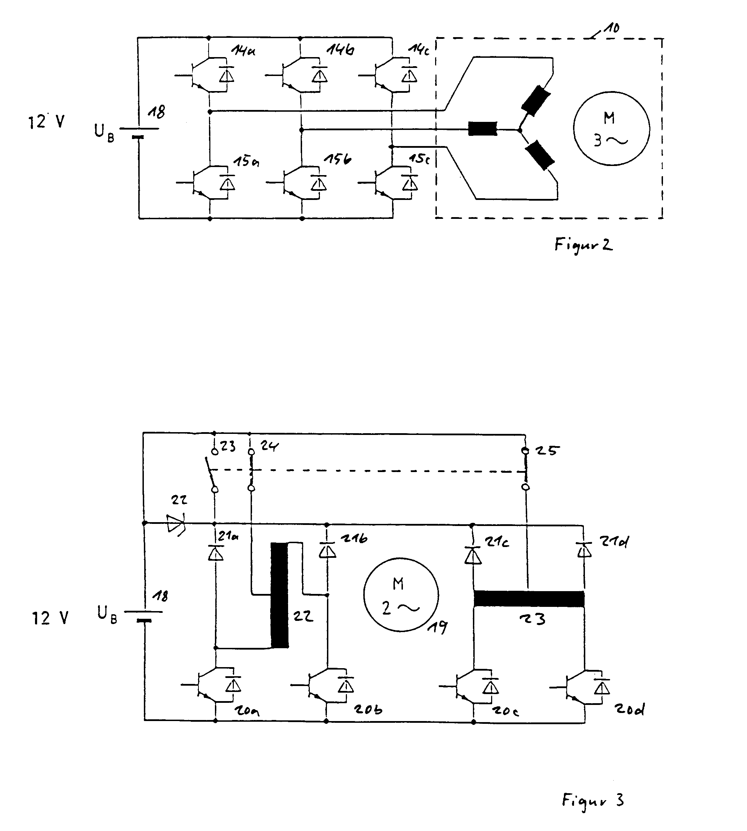

In der Figur 2 ist ein Ausführungsbeispiel einer Asynchronmaschine nach Figur 1 dargestellt, die als Schwungradstarter/Generator über Pulswechselrichter direkt mit einer 12 Volt-Batterie 18 verbunden ist. Im übrigen ist die Funktion und Wirkungsweise analog zu der in Figur 1 beschriebenen Asynchronmaschine. Statt der aus Figur 2 bekannten Asynchronmaschine kann prinzipiell auch eine permanenterregte Synchronmaschine, die z.B. in Zweiphasenschaltung oder in Dreiphasenschaltung ausgebildet ist und über Wechselrichter bzw. Dioden an eine Batterie 18 angeschlossen ist, verwendet werden. Ein Beispiel einer permanenterregten Synchronmaschine in Zweiphasenschaltung 19 ist in Figur 3 dargestellt.

Die Ständerwicklungen 22 und 23 sind über vier Halbleiterschalter 20a-d, die jeweils aus einem Transistor und einer antiparallel geschalteten Diode bestehen, mit dem negativen Pol der Batterie 18 verbunden, die Verbindung mit dem positiven Pol der Batterie erfolgt über die vier Dioden 21a bis 21d. In die Verbindungsleitung zwischen den Kathoden dieser Dioden und dem positiven Pol der Batterie wird zusätzlich eine Zenerdiode 22 geschaltet. 23, 24 und 25 sind Schalter, über die der positive Pol der Batterie direkt mit den Kathoden der Dioden 21a bis 21d bzw. mit den Mittelanzapfungen der Wicklungen 22 und 23 verbunden werden kann.

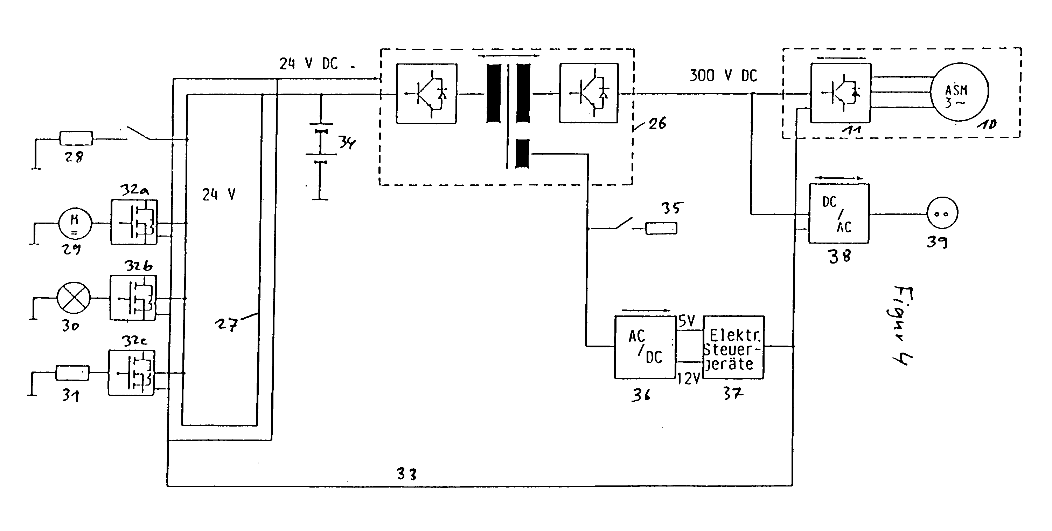

In Figur 4 ist ein Ausführungsbeispiel einer kompletten Bordnetzkonfiguration mit Multiplex und Asynchronmaschine als Schwungradstarter/Generator dargestellt.

Dabei sind die drei Phasenwicklungen des Asynchronmotors 10 mit dem Pulswechselrichter 11 verbunden. Eine weitere Verbindungsleitung führt vom Pulswechselrichter 11 zum bidirektionalen Gegentaktwandler 26 und von dort aus weiter zu einem 24 Volt-Ringnetz 27, an das geregelte und ungeregelte Verbraucher 28, 29, 30 und 31 angeschlossen sind. Dabei werden die Verbraucher über gesteuerte Leistungshalbleiter 32 geschaltet bzw. geregelt und über eine Datenringleitung 33 angesteuert (Multiplex). Zwischen den Ausgang des bidirektionalen Gegentaktwandlers, der mit den 24 Volt-Verbrauchern verbunden ist und Masse, ist eine Batterie 34 geschaltet.

Vom bidirektionalen Gegentaktwandler 26 wird eine 80 Volt 20 kHz-Spannung zur Scheibenheizung ausgekoppelt, dieselbe Leitung wird über einen AC/DC-Wandler 36 zur Spannungsversorgung der elektronischen Steuergeräte 37 benutzt. Ein DC/AC-Wandler 38 ist einerseits mit dem Ausgang des Schwungradstarters/Generators 10, 11 verbunden und andererseits über die Datenringleitung 33 mit einem oder gegebenenfalls mehreren elektronischen Steuergeräten 37. Von diesem Wandler führt eine weitere Leitung zu einer Steckdose 39 mit 220 Volt und 50 Hz.

Die Funktion der Bordnetzkonfiguration wird anhand der Figuren 1 und 4 erläutert.

Im Normalbetrieb wird in der Asynchronmaschine 10 eine 300 Volt-Wechselspannung erzeugt, die im Pulswechselrichter 11 zu einer 300 Volt Gleichspannung gewandelt wird. Diese 300 Volt Gleichspannung liegt am Kondensator 16 und wird auf der Primärseite des bidirektionalen Wandlers in eine hochfrequente Wechselspannung zerhackt, die auf der Sekundärseite auf 24 Volt transformiert und wieder gleichgerichtet wird. Auf der Sekundärseite des bidirektionalen Wandlers entsteht demnach eine 24 Volt-Gleichspannung, die an der Batterie 17 bzw. 34 anliegt. Mit dieser 24 Volt-Gleichspannung wird auch das 24 Volt-Ringnetz sowie die geregelten bzw. ungeregelten 24 Volt-Verbraucher über ein Multiplex-System versorgt. Die Datenringleitung 33, die die einzelnen Bordnetzsysteme untereinander verbindet und zu einem elektronischen Steuergerät führt, ermöglicht eine unabhängige Steuerung der einzelnen Systeme. Über eine zusätzliche Wicklung auf der Primärseite des bidirektionalen Gegentaktwandlers wird eine zusätzliche Wechselspannung ausgekoppelt, die direkt die Heizscheibe versorgt. Aus derselben Wicklung wird über einen Gleichspannungswandler 36 das elektronische Steuergerät 37 versorgt. Zusätzlich wird über einen weiteren Wandler 38 eine 220 Volt, 50 Hz-Wechselspannung zum Betrieb einer Steckdose 39 im Fahrzeug verwendet.

Im Startfall wird der Schwungradstarter/Generator 10, 11 als Starter betrieben, er wird aus der Batterie 34 über den bidirektionalen Gegentaktwandler 26 und den Pulswechselrichter 11 mit Leistung versorgt. Durch die Verwendung des bidirektionalen Gegentaktwandlers kann also entweder Leistung aus den Generator in das Bordnetzsystem bzw. die Batterie übertragen werden oder aber umgekehrt im Startfall Leistung aus der Batterie in den Starter übertragen werden.

Anstelle eines Schwungradstarter/Generators können auch Einzelkomponenten, also beispielsweise ein permanenterregter, auf Bordnetzspannung ausgelegter Vorlegestarter und ein Asynchron- oder Synchrongenerator für höhere Spannung verwendet werden.

## Patentansprüche

1. Fahrzeugbordnetzsystem mit einer Batterie (17), einem Generator (10) sowie Verbrauchern, das mehere verschiedene, an die jeweiligen Erfordernisse der einzelnen Bordnetzkomponenten angepaßte Spannungen aufweist, wobei der Generator ein Starter/Generator als Wechselstrommaschine zum wahlweisen Betrieb als Generator oder Anlassermotor für die Brennkraftmaschine ausgeführt ist und über Umrichter (11) mit einem Gleichspannungszwischenkreis, dessen Spannung gegenüber der Bordnetzspannung deutlich erhöht ist, verbunden ist und die Verbraucher des Bordnetzes mit dem Gleichspannungszwischenkreis über geeignete Spannungswandler (12) verbunden sind.

2. Fahrzeugbordnetzsystem nach Anspruch 1, dadurch gekennzeichnet, daß zwischen der elektrischen Maschine und der Batterie ein bidirektionaler Wandler (12) angeordnet ist.

3. Fahrzeugbordnetzsystem nach Anspruch 1, dadurch gekennzeichnet, daß die zwischen dem Starter/Generator und dem Gleichspannungszwischenkreis liegenden Umrichter Pulswechselrichter (11) sind und daß die Spannung des Starter/Generators und der Pulswechselrichter deutlich höher ist als die Bordnetzspannung, vorzugsweise 200 bis 300 Volt.

4. Fahrzeugbordnetzsystem nach einem der vorhergehenden Ansprüche, dadurch gekennzeichnet, daß die Batterie- und Verbraucherspannung vorzugsweise 24 Volt beträgt.

5. Fahrzeugbordnetzsystem nach einem der vorhergehenden Ansprüche, dadurch gekennzeichnet, daß an den DC-Spannungszwischenkreis Elemente zur getrennten Spannungsversorgung weiterer Verbraucher, insbesondere mit 220 Volt-Wechselspannung betreibbare, zugeordnet sind.

6. Fahrzeugbordnetzsystem nach Anspruch 1, dadurch gekennzeichnet, daß als elektrische Maschine eine Asynchronmaschine oder eine Synchronmaschine in Zwei- oder Dreiphasenschaltung verwendet wird.

7. Vorrichtung nach Anspruch 1, dadurch gekennzeichnet, daß die elektrische Maschine in einer Sternwicklung über Pulswechselrichter mit einem bidirektionalen Wandler (11) verbunden ist.

8. Fahrzeugbordnetzsystem nach einem der vorhergehenden Ansprüche, dadurch gekennzeichnet, daß die Verbraucher mit einem Ringnetz in Verbindung stehen.

9. Fahrzeugbordnetzsystem nach Anspruch 1, dadurch gekennzeichnet, daß als Starter/Generator zwei getrennte elektrische Maschinen vorgesehen sind.

10. Fahrzeugbordnetzsystem nach Anspruch 9, dadurch gekennzeichnet, daß als Starter/Generator ein Schwungradstarter/Generator vorgesehen ist.

11. Fahrzeugbordnetzsystem nach einem der vorhergehenden Ansprüche, dadurch gekennzeichnet, daß Batterie und Starter und/oder Generator unabhängig voneinander an beliebiger Stelle im Fahrzeug eingebaut werden.

12. Fahrzeugbordnetzsystem nach einem der vorhergehenden Ansprüche, dadurch gekennzeichnet, daß Batterie und Starter und/oder Generator voneinander potentialgetrennt sind.

## Claims

1. Motor vehicle electrical system having a battery (17), a generator (10) and loads, which has a plurality of different voltages matched to the respective requirements of the individual vehicle electrical system components, the generator being designed [sic] a starter/generator as an AC machine for optional operation as a generator or starter motor for the internal-combustion engine and being connected via converters (11) to a DC link whose voltage is distinctly higher than the vehicle electrical system voltage, and the loads of the vehicle electrical system being connected to the AC link via suitable voltage converters (12).

2. Motor vehicle electrical system according to Claim 1, characterised in that a bidirectional converter (12) is arranged between the electrical machine and the battery.

3. Motor vehicle electrical system according to Claim 1, characterised in that the converters located between the starter/generator and the DC link are pulse-controlled invertors (11), and in that the voltage of the starter/generator and of the pulse-controlled invertors is distinctly higher than the vehicle electrical system voltage, preferably 200 to 300 volts.

4. Motor vehicle electrical system according to one of the preceding claims, characterised in that the battery and load voltage are preferably 24 volts.

5. Motor vehicle electrical system according to one of the preceding claims, characterised in that the DC link is assigned elements for the separate voltage supply of further loads, in particular operable by means of 220 volts AC voltage.

6. Motor vehicle electrical system according to Claim 1, characterised in that use is made as electrical machine of an asynchronous machine or of a synchronous machine in a two-phase or three-phase circuit.

7. Device according to Claim 1, characterised in that the electrical machine is connected to a bidirectional converter (11) in a star winding via pulse-controlled invertors.

8. Motor vehicle electrical system according to one of the preceding claims, characterised in that the loads are connected to a ring circuit.

9. Motor vehicle electrical system according to Claim 1, characterised in that two separate electrical machines are provided as starter/generator.

10. Motor vehicle electrical system according to Claim 9, characterised in that a flywheel starter/generator is provided as starter/generator.

11. Motor vehicle electrical system according to one of the preceding claims, characterised in that the battery and starter and/or generator are installed independently of one another at an arbitrary point in the vehicle.

12. Motor vehicle electrical system according to one of the preceding claims, characterised in that the battery and starter and/or generator are mutually isolated.

## Revendications

1. Réseau de bord de véhicule comprenant une batterie (17), un générateur (10) et les utilisateurs fournissant plusieurs tensions adaptées aux exigences respectives des différents composants du réseau de bord, le générateur étant un démarreur/générateur sous forme de machine électrique à courant alternatif pour fonctionner sélectivement comme générateur ou démarreur du moteur thermique, et qui est relié par des redresseurs (11) à un circuit intermédiaire de tension continue dont la tension est beaucoup plus élevée que celle du réseau de bord, et les utilisateurs du réseau de bord étant reliés au circuit intermédiaire de tension continue par des convertisseurs de tension (12) appropriés.

2. Réseau de bord de véhicule selon la revendication 1, caractérisé en ce qu'entre la machine électrique et la batterie il est prévu un convertisseur bi-directionnel (12).

3. Réseau de bord de véhicule selon la revendication 1, caractérisé en ce qu'entre le démarreur/générateur et le redresseur du circuit intermédiaire de tension continue on a des redresseurs impulsionnels (11) et la tension du démarreur/générateur et celle du redresseur impulsionnel est beaucoup plus élevée que la tension du réseau de bord, de préférence 200 à 300 volts.

4. Réseau de bord de véhicule selon l'une des revendications précédentes, caractérisé en ce que la tension de la batterie ou des utilisateurs est de préférence de 24 volts.

5. Réseau de bord de véhicule selon l'une des revendications précédentes, caractérisé en ce qu'au circuit intermédiaire de tension continue sont associés des éléments pour alimenter séparément en tension d'autres utilisateurs recevant notamment une tension alternative de 220 volts.

6. Réseau de bord de véhicule selon la revendication 1, caractérisé en ce que la machine électrique est une machine asynchrone ou une machine synchrone à deux ou trois phases.

7. Dispositif selon la revendication 1, caractérisé en ce que la machine électrique est branchée en étoile et est reliée par un redresseur impulsionnel à un convertisseur bi-directionnel (11).

8. Réseau de bord de véhicule selon l'une des revendications précédentes, caractérisé en ce que l'utilisateur est relié à une boucle.

9. Réseau de bord de véhicule selon la revendication 1, caractérisé en ce que l'ensemble démarreur/générateur est constitué par deux machines électriques distinctes.

10. Réseau de bord de véhicule selon la revendication 9, caractérisé en ce que l'ensemble démarreur/générateur est un ensemble démarreur à volant d'inertie/générateur.

11. Réseau de bord de véhicule selon l'une des revendications précédentes, caractérisé en ce que la batterie et le démarreur et/ou le générateur sont montés indépendamment à des endroits quelconques dans le véhicule.

12. Réseau de bord de véhicule selon l'une des revendications précédentes, caractérisé en ce que la batterie et le démarreur et/ou le générateur sont découplés sur le plan du potentiel.
